(19) Europäisches Patentamt / European Patent Office / Office européen des brevets

(11) **EP 2 022 234 B1**

(12) **FASCICULE DE BREVET EUROPEEN**

(45) Date de publication et mention de la délivrance du brevet:
**10.07.2013 Bulletin 2013/28**

(21) Numéro de dépôt: **07731455.7**

(22) Date de dépôt: **14.05.2007**

(51) Int Cl.:
*H04L 29/06* *(2006.01)*

(86) Numéro de dépôt international:
**PCT/FR2007/000816**

(87) Numéro de publication internationale:
**WO 2007/135274 (29.11.2007 Gazette 2007/48)**

(54) **DISPOSITIF DE RECEPTION DE MESSAGES, EN PARTICULIER DANS LE CADRE DE CHANGES SECURISES DE DONNEES, AERONEF ET PROCEDES ASSOCIES**

VORRICHTUNG ZUM EMPFANGEN VON NACHRICHTEN, INSBESONDERE IM RAHMEN EINES SICHEREN DATENAUSTAUSCHES, ZUGEHÖRIGES LUFTFAHRZEUG UND VERFAHREN

DEVICE FOR RECEIVING MESSAGES, IN PARTICULAR WITHIN THE FRAMEWORK OF SECURE DATA EXCHANGES, ASSOCIATED AIRCRAFT AND METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.05.2006 FR 0651859**

(43) Date de publication de la demande:
**11.02.2009 Bulletin 2009/07**

(73) Titulaire: **Airbus Operations
31060 Toulouse (FR)**

(72) Inventeurs:
• **LECLERCQ, Agnès**
  **F-31500 Toulouse (FR)**
• **COLLE-MORLEC, Cécile**
  **F-31870 Lagardelle sur Leze (FR)**

(74) Mandataire: **Bonnans, Arnaud
Santarelli,
14 avenue de la Grande Armée,
BP 237
75822 Paris Cedex 17 (FR)**

(56) Documents cités:
**WO-A-2005/078986    US-A1- 2004 047 308**

**Description**

L'invention concerne un dispositif de réception de messages, en particulier dans le cadre d'échanges de données sécurisés (par exemple entre un aéronef et une base au sol), ainsi qu'un aéronef et un procédé de réception associés.

Les échanges de données sécurisés entre un émetteur et un récepteur font fréquemment l'objet d'attaques de la part de personnes non-autorisées à connaître le contenu des messages représentés par les données échangées.

Une attaque de ce type, généralement dénommée "*rejeu*", consiste en la réémission, par l'attaquant et à un moment ultérieur opportun, d'un message émis par l'émetteur autorisé.

Pour contrer ce type d'attaque, il a été proposé de prévoir un premier compteur au niveau de l'émetteur et un second compteur au niveau du récepteur, les compteurs étant synchronisés lors d'une phase d'initialisation. Ainsi, lors de l'émission d'un message, un numéro de compteur est attribué à celui-ci par le dispositif émetteur, qui incrémente le compteur à chaque émission. De son côté, le récepteur vérifie le numéro de compteur de chaque message reçu et incrémente de même son propre compteur à chaque réception d'un message. Il est ainsi impossible pour un attaquant d'intercaler un message dans la série de messages échangés, identifiés chacun de manière unique au moyen des compteurs.

Cette solution n'est toutefois applicable que dans le cadre des protocoles à messages synchrones, c'est-à-dire pour lesquels l'ordre des messages en réception est identique à l'ordre des messages à l'émission.

Elle est en effet inadaptée pour les protocoles à message asynchrone, dans lesquels existe la possibilité d'un changement de l'ordre des messages à la réception par rapport à l'ordre à l'émission. C'est le cas par exemple lorsque des niveaux de priorité sont attribués aux messages et que la transmission de messages de priorité supérieure peut primer la transmission de messages de priorité inférieure, comme par exemple dans le protocole de communication ACARS (pour *"Aircraft Communication Addressing and Reporting System"*) utilisé couramment en avionique.

Le document WO 2005/078986, 25 Août 2005, propose un procédé et dispositif de réception de messages ayant chacun un numéro d'ordre.

Afin de lutter contre les attaques de type *"rejeu"* quel que soit le protocole utilisé, l'invention propose un dispositif de réception de messages ayant chacun un numéro d'ordre, caractérisé en ce qu'il comprend des moyens de mémorisation d'une pluralité de statuts de réception préalable, des moyens de modification du statut associé à un numéro d'ordre à réception d'un message ayant ledit numéro d'ordre et des moyens de traitement du message en fonction du statut associé à son numéro d'ordre.

La réception préalable d'un message, identifié par son numéro d'ordre, peut ainsi être vérifiée à réception de celui-ci et le traitement du message effectué en conséquence.

Les statuts de réception préalable sont par exemple mémorisés sous forme d'une table de bits, ce qui constitue une forme pratique de mise en oeuvre, avec un faible coût en mémoire.

Le statut associé audit numéro d'ordre peut dans ce cas être représenté à une position de la table correspondant audit numéro d'ordre.

Selon un mode de réalisation envisageable, la table est formée d'une pluralité de sous-listes dont la gestion est aisée.

Lorsque la table vise en pratique un ensemble fini de numéros d'ordre, le dispositif peut comprendre des moyens d'initialisation d'une partie des statuts de réception préalable quand ledit numéro d'ordre n'est pas compris dans l'ensemble fini de numéros d'ordre.

Selon une possibilité de mise en oeuvre pratique, on peut prévoir des moyens de décryptage pour obtenir le message et le numéro d'ordre à partir d'un message crypté.

Afin d'éviter tout risque d'attaque par rejeu, on peut prévoir des moyens de rejet du message lorsque ledit statut associé indique une réception préalable.

On peut prévoir en outre des moyens pour afficher le message lorsque ledit statut associé n'indique au contraire aucune réception préalable.

L'invention propose également un aéronef caractérisé en ce qu'il comprend un dispositif comme évoqué ci-dessus.

Dans le même ordre d'idée, l'invention propose un procédé de réception d'un message ayant un numéro d'ordre caractérisé par les étapes suivantes :

- lecture d'un statut de réception préalable associé au numéro d'ordre dans un moyen de mémorisation ;
- si le statut lu n'indique aucune réception préalable, modification du statut ;
- si le statut indique une réception préalable, rejet du message.

Un tel procédé peut présenter certaines des caractéristiques optionnelles évoquées ci-dessus à propos du dispositif et les avantages qui en découlent.

L'invention propose enfin un aéronef comprenant un dispositif apte à mettre en oeuvre de tels procédés.

L'invention se rapporte à un procédé et à un dispositif de réception de messages ayant chacun un numéro d'ordre selon les revendications 1 à 13.

D'autres caractéristiques de l'invention ressortiront à la lumière de la description qui suit, faite en référence aux dessins annexés dans lesquels :

- la figure 1 représente le contexte général de l'invention ;

3 **EP 2 022 234 B1** 4

- la figure 2 représente les éléments d'un dispositif de réception utiles à la compréhension de l'invention ;
- la figure 3 représente les étapes d'un procédé de réception d'un message conformes aux enseignements de l'invention ;
- la figure 4 représente un ensemble de statuts de réception utilisé par le procédé de la figure 3 ;
- la figure 5 représente les étapes d'un procédé de réception d'un message selon un second mode de réalisation de l'invention ;
- la figure 6 représente un ensemble de statuts de réception utilisé par le procédé de la figure 5 ;
- la figure 7 représente un ensemble de statuts de réception utilisé par le procédé de la figure 8 ;
- la figure 8 représente les étapes d'un procédé de réception d'un message selon un troisième mode de réalisation de l'invention.

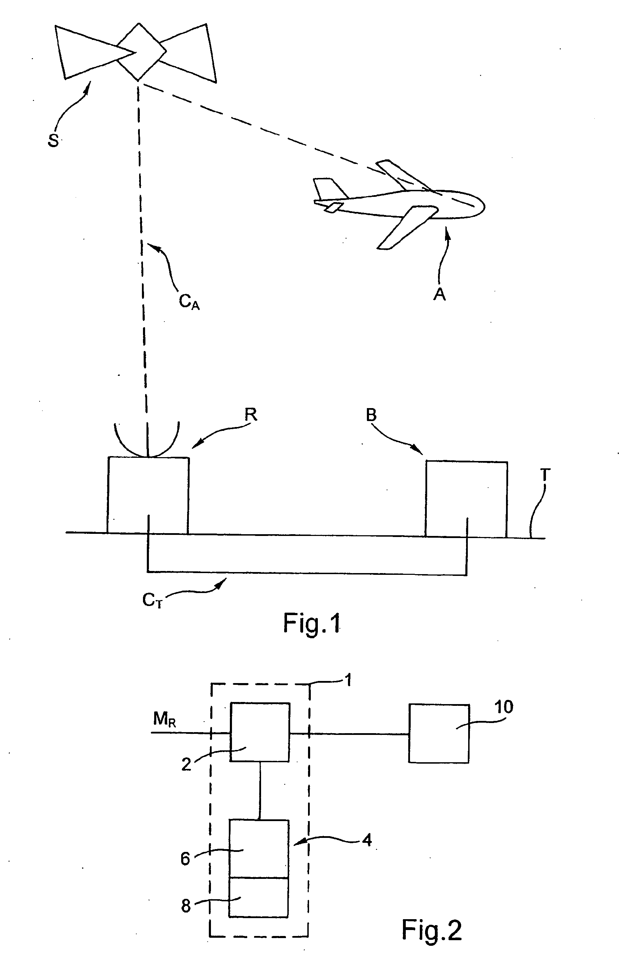

La **figure 1** représente le contexte général dans lequel est mise en oeuvre l'invention.

Une base au sol B communique avec un aéronef A au moyen d'une liaison qui permet l'échange de données sous forme numérique (c'est-à-dire selon le terme anglais "*data link*") et qui implique notamment une liaison sol-air $C_A$.

La liaison entre la base au sol B et l'aéronef A peut impliquer en outre d'autres dispositifs et liaisons. Par exemple, en figure 1, la base au sol B communique avec un relais R (également situé au sol T) au moyen d'un réseau de communication terrestre $C_T$ ; le relais R transmet les informations à destination et en provenance de l'aéronef A par l'intermédiaire d'un satellite S.

On remarque que l'utilisation d'un relais R est relativement courante du fait que les informations échangées entre la base au sol B et l'aéronef A sont classiquement acheminées par le relais R et le satellite S sous la responsabilité d'un fournisseur de service.

En variante, on pourrait prévoir que les informations soient échangées directement entre l'aéronef A et la base au sol B.

Par ailleurs, on pourrait prévoir d'utiliser des communications radios HF ou VHF au lieu de la communication par satellite.

La **figure 2** représente les éléments du récepteur utiles à la compréhension de l'invention dont plusieurs exemples de réalisation sont donnés dans la suite.

Un dispositif de réception et de traitement de messages 1 comprend un microprocesseur 2 lié à des moyens de mémorisation 4, qui comprennent ici une mémoire vive 6 et une mémoire non-volatile 8.

Le dispositif de réception 1 reçoit des données représentées sous forme numérique et qui forment un message crypté $M_R$ en provenance de l'émetteur, par exemple dans le contexte qui vient d'être décrit en référence à la figure 1.

On remarquera que le terme message signifie ici un ensemble de données ; il peut s'agir d'un message destiné à un utilisateur (message au sens strict), par exemple sous forme de texte, mais également de données ou instructions à destination d'un dispositif, par exemple électronique, côté récepteur.

Les données formant le message crypté $M_R$ ont été préalablement mises en forme à partir du signal transmis sur le canal de transmission $C_A$, $C_T$ par des dispositifs adéquats, du type syntoniseur, démodulateur et décodeur, qui peuvent faire partie intégrante du dispositif de réception 1 ou constituer, en totalité ou en partie, des dispositifs extérieurs au dispositif de réception 1 et connectés à celui-ci.

Le dispositif de réception 1 mémorise en particulier des moyens pour décrypter le message crypté $M_R$, en particulier par exemple une clé cryptographique stockée en mémoire non-volatile 8.

Pour son décryptage, le message reçu crypté $M_R$ est par exemple mémorisé en mémoire vive 6, puis décrypté au moyen d'un procédé mis en oeuvre par le microprocesseur 2 et utilisant la clé cryptographique qui vient d'être mentionnée, ce qui permet d'obtenir le message M, à afficher en temps normal comme expliqué dans la suite. Le message M est par exemple stocké de manière temporaire en mémoire vive 6.

Le décryptage du message reçu $M_R$ permet également d'obtenir ici un numéro d'ordre n attribué au message M par l'émetteur. Le numéro d'ordre n est par exemple codé de manière appropriée au sein du message reçu $M_R$. En variante, le numéro d'ordre n pourrait être transmis séparément du message $M_R$, tout en gardant un lien avec celui-ci qui permette au dispositif de réception de les associer.

Le numéro d'ordre n est attribué au message M au niveau du dispositif émetteur afin d'identifier de manière unique ce message. Pour ce faire, le dispositif émetteur utilise par exemple un compteur dédié au dispositif de réception concerné : le numéro d'ordre du message est dans ce cas la valeur du compteur à l'émission et le compteur est incrémenté à chaque émission d'un message.

Dans le mode de réalisation décrit ici, les numéros d'ordre correspondront donc à l'ordre des messages à l'émission. On pourrait toutefois envisager des solutions dans lesquelles les numéros d'ordre soient sans lien direct avec l'ordre d'émission des messages, ou soient par exemple attribués par ordre décroissant en fonction de l'émission des messages.

Par ailleurs, comme déjà mentionné et décrit dans la suite, la solution proposée permet la réception des messages dans un ordre différent de l'ordre d'émission, si bien que le numéro d'ordre attribué à chaque message n'est pas lié à l'ordre de réception des messages.

Comme décrit dans la suite dans le cas de plusieurs exemples de réalisation envisageables, le numéro d'ordre n identifiant de manière unique le message M permet, par lecture dans une table $S_R$ indiquant le statut de réception préalable et stockée dans les moyens de mémorisation 4, de vérifier que le message M n'a pas

**3**

été préalablement reçu afin de détecter le rejeu éventuel du message par un attaquant.

Dans le cas où le message n'a pas été reçu au préalable (et donc que l'hypothèse d'un rejeu est écartée), le microprocesseur 2 peut transmettre celui-ci à un dispositif d'affichage 10 pour affichage du message M à un utilisateur. Naturellement, d'autres traitements du message M que l'affichage pourraient être envisagés ; par exemple, lorsque le contenu du message constitue des données utilisables par l'appareil au sein duquel est implanté le récepteur (par exemple un aéronef), le traitement peut consister à utiliser des données reçues.

On va décrire à présent trois exemples de procédé de réception d'un message conforme aux enseignements de l'invention, mis en oeuvre par le microprocesseur 2 selon des instructions mémorisées sous forme de programme d'ordinateur au sein de la mémoire non-volatile 8.

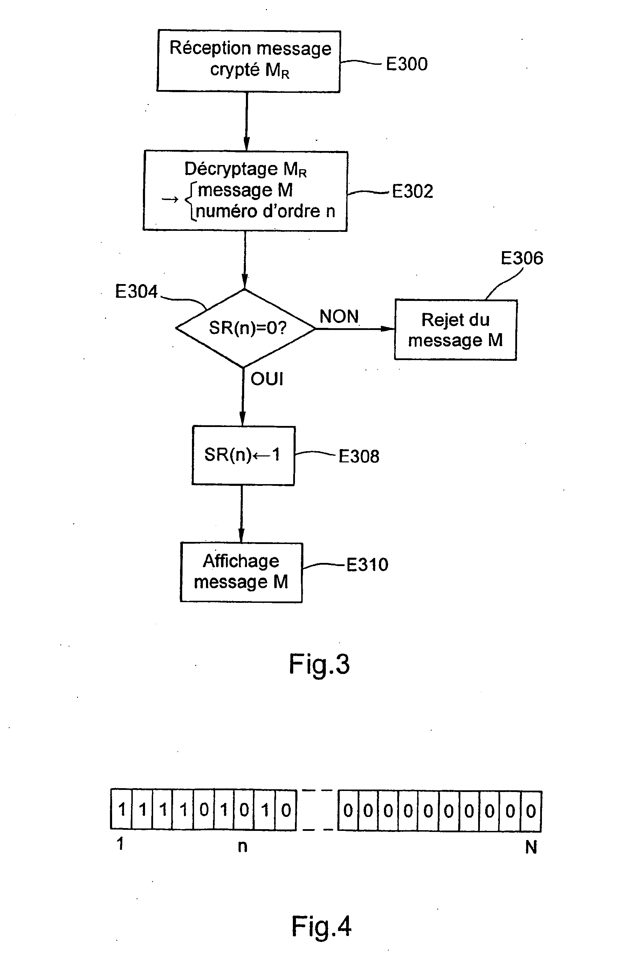

La figure 3 représente un premier exemple de procédé de réception d'un message.

Ce procédé débute par la réception d'un message crypté $M_R$ au cours d'une étape E300, selon des modalités déjà décrites.

Le dispositif de réception 1 (et en particulier le microprocesseur 2) procède alors au décryptage du message reçu $M_R$ au cours d'une étape E302, afin d'obtenir le message décrypté M et le numéro d'ordre n attribué à celui-ci à l'émission.

Le microprocesseur 2 procède alors à la lecture dans une table $S_R$ mémorisée dans les moyens de mémorisation 4, du statut de réception préalable $S_R(n)$ associé au numéro d'ordre n.

On prévoit dans l'exemple décrit ici que la table $S_R$ est une table de N bits, dont chaque bit mémorise la réception préalable d'un message ayant le numéro d'ordre correspondant à la position du bit concerné dans la table.

On indique dans cette table $S_R$ la réception préalable d'un message de numéro d'ordre i par la valeur 1 à la position i de la table $S_R$ (c'est-à-dire $S_R(i)=1$) ; la valeur 0 d'un bit $S_R(i)$ indique donc qu'aucun message ayant le numéro d'ordre i n'a été reçu à l'instant concerné.

La figure 4 représente schématiquement une telle table $S_R$ à un moment du fonctionnement auquel n'ont été reçus que des messages ayant des numéros d'ordre suivants : 1, 2, 3, 4, n-1, n+1 (sur la figure 4, n=7).

Dans cet exemple, à l'instant du fonctionnement représenté à la figure 4, le message ayant un numéro d'ordre n n'a pas été reçu puisque le bit correspondant de la table $S_R$ est à zéro.

On peut ainsi vérifier à l'étape E304 si la valeur $S_R(n)$ lue est bien nulle, c'est-à-dire si la réception du message au cours de l'étape E300 est bien la première réception de ce message.

Dans la négative (c'est-à-dire si $S_R(n)=1$), un message avec un numéro d'ordre identique a été préalablement reçu, ce qui implique que le message reçu à l'étape E300 provient en fait du rejeu d'un message précédent et que l'on doit considérer dans ce cas qu'une attaque est en cours. On procède de ce fait dans ce cas au rejet du message M au cours d'une étape E306. D'autres mesures peuvent naturellement être prises dans ce cas, comme par exemple la transmission au moyen de l'affichage 10 d'un message d'alerte informant l'utilisateur qu'une tentative de rejeu a été détectée.

Si on vérifie en revanche lors de l'étape E304 que le message M n'a pas été préalablement reçu (c'est-à-dire dans l'hypothèse où $S_R(n)=0$), l'hypothèse d'un rejeu est écartée.

On procède alors lors d'une étape E308 à la mise à 1 de la position n de la table $S_R$ afin d'indiquer pour les messages suivants que le message ayant un numéro d'ordre n a été reçu.

On peut ensuite procéder au traitement normal du message M, par exemple à l'affichage du message M par transmission de celui-ci au dispositif d'affichage 10 au cours d'une étape E310.

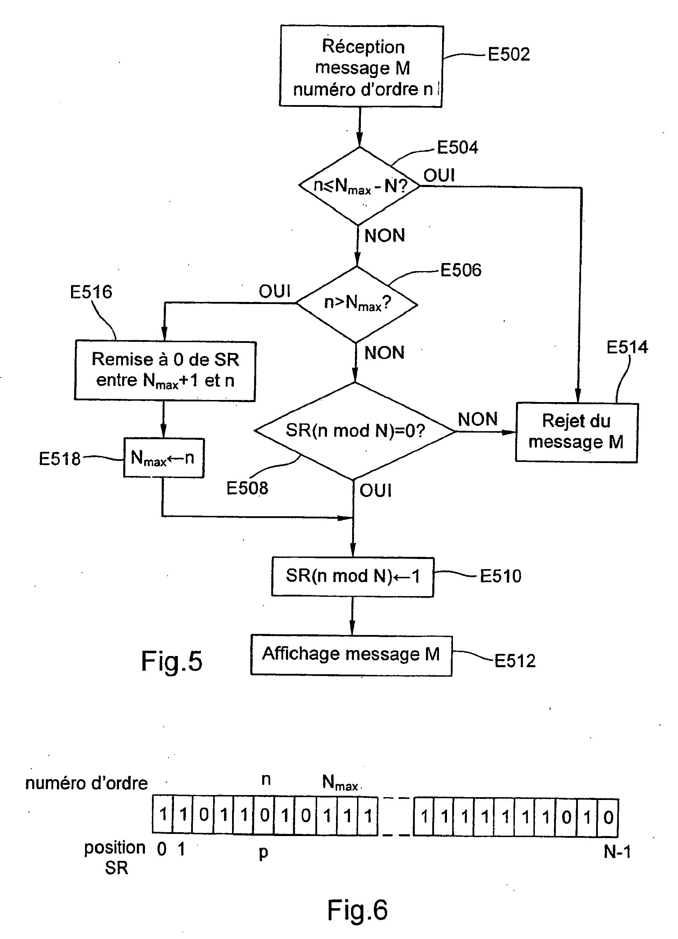

La **figure 5** représente un second exemple de procédé de réception d'un message conforme aux enseignements de l'invention.

Dans le présent exemple de réalisation, comme représenté en figure 6, on utilise pour mémoriser les numéros d'ordre pour lesquels un message a préalablement été reçu une table $S_R$ de longueur N bits, gérée de manière circulaire comme décrit dans la suite.

On notera p la position d'un bit particulier dans la table $S_R$ et donc $S_R(p)$ la valeur du bit à la position p, où p varie entre 0 et N-1.

On mémorise également dans les moyens de mémorisation 4 la valeur $N_{max}$ qui représente le plus grand numéro d'ordre visé par la table $S_R$ à un instant donné. On initialise par exemple cette valeur $N_{max}$ à N-1 de telle sorte que la table $S_R$ représente après initialisation le statut de la réception préalable des messages ayant un numéro d'ordre compris entre 0 et N-1. On remet à cette occasion à zéro tous les bits de la table $S_R$.

Le procédé de réception d'un message débute par la réception au cours d'une étape E502 d'un message M auquel est associé un numéro d'ordre n, par exemple au moyen du décryptage d'un message crypté représentatif du message M et du numéro d'ordre n, comme expliqué à propos les étapes E300 et E302 de la figure 3 décrite ci-dessus.

On compare alors lors d'une étape E504 le numéro d'ordre n à la valeur inférieure des numéros d'ordre visés dans la table $S_R$ (le plus petit numéro d'ordre étant en l'occurrence $N_{max}$-N+1) pour vérifier si le statut de réception associé au numéro d'ordre n est encore représenté dans la table $S_R$.

En pratique, on vérifie si $n \leq N_{max}$-N, et si c'est le cas, le numéro d'ordre reçu n'étant plus visé par la table $S_R$, on ne peut vérifier si le message M reçu constitue ou non le rejeu d'un message précédent, et on procède dans l'exemple décrit ici au rejet du message M lors d'une étape E514.

Si en revanche le numéro d'ordre reçu n est supérieur au plus petit numéro d'ordre représenté à l'instant concerné par la liste $S_R$ (c'est-à-dire si n>$N_{max}$-N), on procède à l'étape E506 décrite à présent.

On détermine alors au cours de cette étape E506 si le numéro d'ordre reçu est supérieur (strictement) au plus grand numéro d'ordre $N_{max}$ visé par la liste.

Dans l'affirmative (c'est-à-dire si n>$N_{max}$), on doit adapter la liste circulaire formée la table $S_R$ afin qu'elle puisse représenter le statut de réception des messages ayant un numéro d'ordre atteignant la valeur du numéro d'ordre reçu n.

On procède tout d'abord pour ce faire à une étape E516 de remise à zéro des positions de la table $S_R$ associées aux numéros d'ordre compris entre $N_{max}$+1 et n.

Il s'agit en pratique ici de remettre à zéro les bits $S_R(p)$ pour lesquels la position p correspond aux valeurs de numéros d'ordre comprises entre $n_{max}$+1 et n ; deux cas peuvent se présenter :

- si $N_{max}$ mod n<n mod N, on remet à zéro les valeurs $S_R(p)$ pour p allant de $N_{max}$+1 mod N à n mod N,
- si n mod N< $N_{max}$ mod N, on remet à zéro les valeurs $S_R(p)$ pour p allant de $N_{max}$ mod N à N-1 et pour p allant de zéro à n mod N.

On considère ici que la différence entre le numéro d'ordre reçu n et le plus grand numéro d'ordre $N_{max}$ considéré dans la liste $S_R$ est inférieur (strictement) à N, ce qui est le cas en pratique en prenant N suffisamment grand dans le système concerné.

On peut d'ailleurs selon un mode de réalisation envisageable (non décrit en figure 5) rejeter les messages pour lesquels le numéro d'ordre serait trop différent de $N_{max}$, par exemple différent de plus de N/2. On peut considérer en effet qu'un tel numéro d'ordre proviendrait d'une erreur ou d'une attaque ; de fait, un numéro d'ordre reçu n supérieur de plus de N de la valeur précédente $N_{max}$ aurait pour conséquence lors de l'étape E516 l'effacement de l'ensemble de la table et rendrait impossible la réception de messages ultérieurs ayant un numéro d'ordre proche de $N_{max}$.

Une fois les statuts de réception associés aux numéros compris entre $N_{max}$+1 et n remis à zéro, on écrit avec écrasement la valeur n du numéro d'ordre reçu dans le registre $N_{max}$ en tant que nouveau numéro d'ordre maximum visé par la table $S_R$.

On procède de la sorte à la gestion circulaire de la table $S_R$.

Du fait que, dans l'alternative décrite ici, il a été déterminé à l'étape E506 que le numéro d'ordre reçu n était strictement supérieur au numéro d'ordre maximum $N_{max}$ visé par la table $S_R$, on sait par construction que l'on est dans un cas où le message N ayant ce numéro d'ordre n n'a pas été reçu au préalable et on peut donc écarter l'hypothèse d'un rejeu.

C'est pourquoi l'étape E518 est suivie dans l'exemple décrit ici d'une étape E510 décrite plus bas, sans procéder au test de l'étape E508.

Si on détermine au contraire lors de l'étape E506 que le numéro d'ordre reçu n n'est pas strictement supérieur au numéro d'ordre maximum $N_{max}$ visé dans la table $S_R$, ce qui implique qu'un statut de réception préalable SR(p) est associé dans la table SR au numéro d'ordre n reçu, on peut lire ce statut $S_R(p)$ dans la mémoire 4 et vérifier si ce statut indique ou non que le message ayant le numéro d'ordre n a déjà été reçu.

Du fait de la gestion circulaire de la liste, la position p dans la table $S_R$ associée au numéro d'ordre n est dans l'exemple décrit ici le reste du numéro d'ordre n modulo N, c'est-à-dire p=n mod N. Ainsi, si on détermine au cours d'une étape E508 que $S_R$(n mod N)=1 (la valeur 1 indiquant comme dans le premier mode de réalisation que le message ayant le numéro d'ordre associé a été reçu au préalable), on considère que le message reçu provient du rejeu par un attaquant d'un message précédent et on procède de ce fait à l'étape E514 de rejet du message M.

Si on détermine en revanche à l'étape E508 que la valeur du statut de réception préalable associée au numéro d'ordre reçu n est nulle (c'est-à-dire si $S_R$(n mod N)=0, on considère que le message M est reçu pour la première fois et ne provient donc pas du rejeu d'un message précédent par un attaquant.

On peut alors procéder à l'étape E510 de mise à 1 du bit $S_R$(n mod N) lu précédemment pour indiquer lors de la réception de messages futurs que le message ayant le numéro d'ordre n a déjà été reçu.

L'hypothèse d'un rejeu ayant été écartée par la vérification de l'étape E508 (ou exclue par l'étape E506 comme déjà expliqué), on peut alors transmettre le message M au dispositif d'affichage 10 pour affichage lors d'une étape E512.

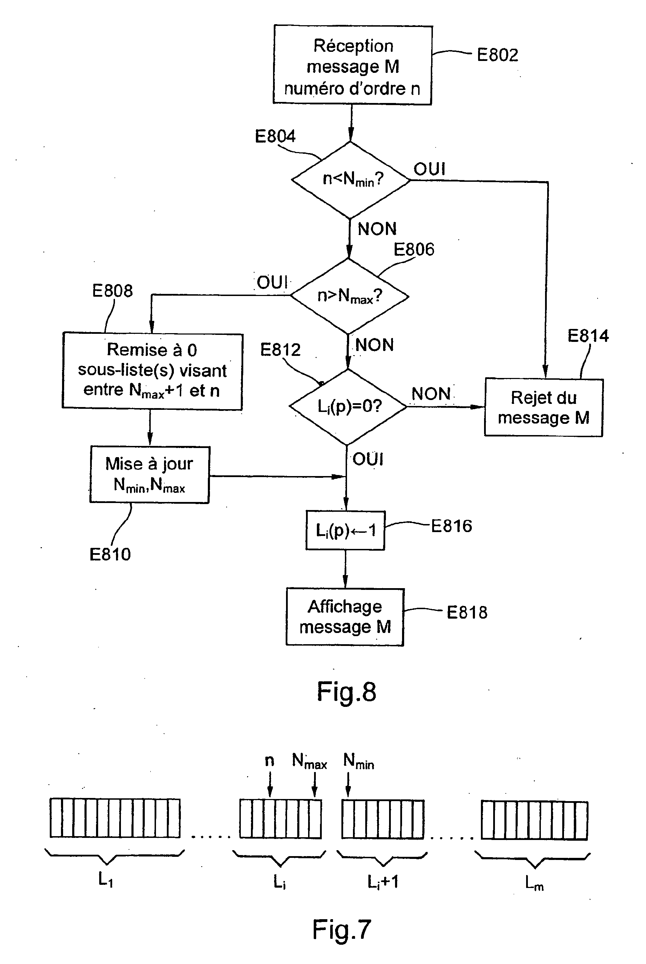

On a représenté à la **figure 7** une table de statuts de réception préalable utilisée dans un troisième mode de réalisation de l'invention.

Dans ce mode de réalisation, la table $S_R$ est divisée en une pluralité de sous-listes $L_1$, $L_2$, ..., $L_m$, chaque sous-liste $L_i$ étant formée d'un nombre $B_i$ de bits.

La longueur totale B de la table $S_R$ en bits vaut donc B=$B_1$+$B_2$+...+$B_m$.

On mémorise également dans ce mode de réalisation le plus petit numéro d'ordre $N_{min}$ et le plus grand numéro d'ordre $N_{max}$ représentés dans la table $S_R$. On a donc $N_{max}$=$N_{min}$+B-1.

A chaque instant, la table $S_R$ composée des sous-listes $L_1$, ... $L_m$ indique donc le statut de réception préalable pour les messages ayant un numéro d'ordre n compris entre $N_{min}$ et $N_{max}$.

Si on désigne par k la liste $L_k$ qui représente à chaque instant le numéro d'ordre $N_{min}$ :

- le numéro d'ordre n sera associé à la position p de

la liste $L_i$ telles que $n = p + \sum_{j=k}^{i-1} B_j + N_{min}$ lorsque

$n - N_{min} < B_k + ... + B_m$ ;

- le numéro d'ordre n sera associé à la position p de la liste $L_i$ telles que

$$n = p + \sum_{j=1}^{i-1} B_j + \sum_{j=k}^{m} B_j + N_{min}$$ lorsque $n - N_{min}$

$\geq B_k + ... + B_m$ ;

La **figure 8** représente les étapes d'un procédé de réception d'un message selon ce troisième mode de réalisation.

On reçoit lors d'une étape E802 un message M auquel est associé un numéro d'ordre n, comme évoqué pour les précédents modes de réalisation.

On teste au cours d'une étape E804 si le numéro d'ordre reçu n est strictement inférieur au plus petit numéro d'ordre $N_{min}$ visé par la table $S_R$, et dans l'affirmative, on procède au rejet du message M au cours d'une étape E814 puisqu'il est impossible dans ce cas de vérifier que le message M n'a pas fait l'objet d'un rejeu de la part d'un attaquant.

Dans la négative, on compare le numéro d'ordre reçu n au plus grand numéro d'ordre $N_{max}$ traité par la table $S_R$ dans son état actuel.

Si le numéro d'ordre reçu n est strictement supérieur à $N_{max}$, on doit adapter la table $S_R$ afin que celle-ci tienne compte de la réception du message M de numéro d'ordre n.

On procède pour ce faire lors d'une étape E808 à la remise à zéro de la sous-liste (ou des sous-listes) relative(s) aux statuts de réception préalable des messages dont le numéro d'ordre est compris entre $N_{max}+1$ et n.

Il s'agit en pratique, en désignant comme précédemment k la sous-liste $L_k$ visant le numéro d'ordre $N_{min}$ au moment de la réception du message M à l'étape E802, à la remise à zéro des sous-listes définies comme suit :

- remise à zéro des sous-listes de la sous-liste $L_k$ à la sous-liste $L_{k+q}$ telle que :

$$\sum_{j=k}^{k+q-1} B_j < n - N_{max} \leq \sum_{j=k}^{k+q} B_j \qquad \text{si}$$

$n \leq N_{max} + \sum_{j=k}^{m} B_j$ (pas de rebouclage de la liste circulaire) ;
- remise à zéro de la sous-liste $L_k$ à la sous-liste

$L_m$ et de la sous-liste $L_1$ à la sous-liste $L_i$ telle que :

$$\sum_{j=k}^{m} B_j + \sum_{j=1}^{i-1} B_j < n - N_{max} \leq \sum_{j=k}^{m} B_j + \sum_{j=1}^{i} B_j$$

si $n > N_{max} + \sum_{j=k}^{m} B_j$ (rebouclage de la liste circulaires).

Une fois la sous-liste ou les sous-listes remise(s) à zéro, on procède à la mise à jour conséquente des valeurs $N_{min}$ et $N_{max}$ en ajoutant à chacune de ces valeurs le nombre de bits contenus dans l'ensemble des sous-listes remises à zéro au cours d'une étape E810.

Une fois la table $S_R$ adaptée à la gestion du numéro d'ordre reçu n comme il vient d'être indiqué en référence aux étapes E808 et E810, on indique que le message ayant le numéro d'ordre n a été reçu en mettant à 1 le bit associé au numéro d'ordre n au cours d'une étape E816 décrite plus bas.

Lorsque le test de l'étape E806 indique que le numéro d'ordre reçu n est inférieur ou égal à $N_{max}$ (et du fait du test de l'étape E804), on peut considérer que le numéro d'ordre n est traité par la table $S_R$ dans son état courant.

On détermine alors la position p et la sous-liste $L_i$ associées au numéro d'ordre reçu n, ici selon la règle de correspondance décrite plus haut.

On vérifie alors au cours d'une étape E812 que le bit associé au numéro d'ordre n indique que le message n'a pas été reçu au préalable (c'est-à-dire que $L_i$ (p)=0), auquel cas on peut procéder au traitement normal du message comme indiqué plus bas à l'étape E816.

Si on détermine au contraire à l'étape E812 que le message a déjà été reçu (c'est-à-dire que le statut de réception associé indique une réception préalable du message par $L_i$(p)=1), on considère que le message reçu est issu d'un rejeu d'un message précédent par un attaquant et on procède par conséquent à l'étape E814 de rejet du message M.

L'étape E816 précédemment évoquée consiste à mettre à 1 le statut (ici le bit) $L_i$(p) associé au numéro d'ordre n afin d'indiquer pour les messages futurs que le message ayant ce numéro d'ordre a été reçu.

L'étape E816 est suivie du traitement usuel du message M, par exemple de l'affichage de celui-ci au cours d'une étape E818 grâce au dispositif d'affichage 10.

Les modes de réalisation qui viennent d'être décrits ne sont que des exemples possibles de réalisation de l'invention qui ne s'y limite pas.

## Revendications

1. Dispositif de réception de messages ayant chacun un numéro d'ordre, **caractérisé en ce qu'**il comprend :

    - des moyens de mémorisation (4) d'une pluralité de statuts de réception préalable sous forme d'une table de bits formée d'une pluralité de sous-listes ($L_i$);
    - des moyens de modification du statut *(SR{n}; SR(nmodN);Lj{p))* associé à un numéro d'ordre (n) à réception d'un message (M) ayant ledit numéro d'ordre (n);
    - des moyens de traitement du message (M) en fonction du statut *(SR{n};SR{nmodN);Lj{p))*associé à son numéro d'ordre (n).

2. Dispositif de réception selon la revendication 1, comprenant en outre :

    - des moyens de mémorisation d'un plus grand numéro d'ordre visé par la table à un instant donné ;
    - des moyens pour remettre à zéro des positions de la table associés aux numéros d'ordre compris entre ledit numéro d'ordre (n) et ledit plus grand numéro d'ordre visé par la table quand ledit numéro d'ordre (n) est plus grand que ledit plus grand numéro d'ordre visé par la table.

3. Dispositif de réception selon l'une des revendications 1 ou 2, dans lequel le statut associé audit numéro d'ordre est représenté à une position *(n; nmodN;p)* de la table correspondant audit numéro d'ordre (n).

4. Dispositif de réception selon l'une des revendications 1 à 3, dans lequel, la table visant un ensemble fini de numéros d'ordre, le dispositif comprend des moyens d'initialisation d'une partie des statuts de réception préalable lorsque ledit numéro d'ordre n'est pas compris dans l'ensemble fini de numéros d'ordre.

5. Dispositif de réception selon l'une des revendications 1 à 4, comprenant des moyens de décryptage (2) pour obtenir le message (M) et le numéro d'ordre (n) à partir d'un message crypte($M_R$).

6. Dispositif de réception selon l'une des revendications 1 à 5, comprenant des moyens de rejet du message lorsque ledit statut associé indique une réception préalable.

7. Dispositif de réception selon l'une des revendications 1 à 6, comprenant des moyens (10) pour afficher le message (M) lorsque ledit statut associé n'indique aucune réception préalable.

8. Aéronef **caractérisé en ce qu'**il comprend un dispositif selon l'une des revendications 1 à 7.

9. Procédé de réception d'un message ayant un numéro d'ordre, **caractérisé par** les étapes suivantes :

    - lecture (E304; E508; E512) d'un statut de réception préalable associé au numéro d'ordre dans un moyen de mémorisation au sein d'une table de bits formée d'une pluralité de sous-listes ($L_i$);
    - si le statut lu n'indique aucune réception préalable, modification du statut (E308 ; E510 ; E816) ;
    - si le statut indique une réception préalable, rejet du message (E306; E514; E814).

10. Procédé de réception selon la revendication 9, dans lequel le statut associé audit numéro d'ordre est représenté à une position de la table correspondant audit numéro d'ordre.

11. Procédé de réception selon la revendication 9 ou 10, dans lequel, la table visant un ensemble fini de numéros d'ordre, le procédé comprend une étape (E516 ; E808) d'initialisation d'au moins un statut de réception préalable lorsque ledit numéro d'ordre n'est pas compris dans l'ensemble fini de numéros d'ordre.

12. Procédé de réception selon l'une des revendications 9 à 11, comprenant une étape de décryptage (E302) pour obtenir le message et le numéro d'ordre à partir d'un message crypté.

13. Procédé de réception selon l'une des revendications 9 à 12, comprenant une étape d'affichage du message (E310 ; E512 ; E818) si ledit statut lu n'indique aucune réception préalable.

## Patentansprüche

1. Vorrichtung zum Empfangen von Nachrichten, die jeweils eine laufende Nummer haben, **dadurch gekennzeichnet, dass** sie umfasst:

    - Mittel zum Speichern (4) einer Vielzahl von Vorempfangsstatus in Form einer aus einer Vielzahl von Unterlisten (Li) gebildeten Bit-Tabelle;
    - Mittel zum Verändern des einer laufenden Nummer (n) zugeordneten Status *(SR{n);SR (nmodN);Lj{p))* bei Empfang einer Nachricht (M), welche die laufende Nummer (n) hat;
    - Mittel zum Verarbeiten der Nachricht (M) in Abhängigkeit des ihrer laufenden Nummer (n) zugeordneten Status *(SR{n};SR{nmodN};Lj{p))*.

**2.** Empfangsvorrichtung nach Anspruch 1, ferner umfassend:

- Mittel zum Speichern einer zu einem gegebenen Zeitpunkt von der Tabelle erfassten größten laufenden Nummer;
- Mittel zum Rückstellen der Positionen der Tabelle auf Null, die den laufenden Nummern zwischen der laufenden Nummer (n) und der von der Tabelle erfassten größten laufenden Nummer zugeordnet sind, wenn die laufende Nummer (n) größer als die von der Tabelle erfasste größte laufende Nummer ist.

**3.** Empfangsvorrichtung nach einem der Ansprüche 1 oder 2, wobei der der laufenden Nummer zugeordnete Status an einer Position *(n;nmodN;p)* der Tabelle, welche der laufenden Nummer (n) entspricht, dargestellt ist.

**4.** Empfangsvorrichtung nach einem der Ansprüche 1 bis 3, wobei, wenn die Tabelle eine endliche Menge von laufenden Nummern erfasst, die Vorrichtung Mittel zum Initialisieren eines Teils der Vorempfangsstatus, wenn die laufende Nummer nicht in der endlichen Menge von laufenden Nummern enthalten ist, umfasst.

**5.** Empfangsvorrichtung nach einem der Ansprüche 1 bis 4, umfassend Entschlüsselungsmittel (2), um die Nachricht (M) und die laufende Nummer (n) anhand einer verschlüsselten Nachricht (M$_R$) zu erhalten.

**6.** Empfangsvorrichtung nach einem der Ansprüche 1 bis 5, umfassend Mittel zum Rückweisen der Nachricht, wenn der zugeordnete Status einen vorherigen Empfang anzeigt.

**7.** Empfangsvorrichtung nach einem der Ansprüche 1 bis 6, umfassende Mittel (10), um die Nachricht (M) anzuzeigen, wenn der zugeordnete Status keinen vorherigen Empfang anzeigt.

**8.** Luftfahrzeug, **dadurch gekennzeichnet, dass** es eine Vorrichtung nach einem der Ansprüche 1 bis 7 umfasst.

**9.** Verfahren zum Empfangen einer eine laufende Nummer aufweisenden Nachricht, **gekennzeichnet durch** die folgenden Schritte:

- Auslesen (E304; E508; E512) eines der laufenden Nummer zugeordneten Vorempfangsstatus aus einem Speichermittel innerhalb einer aus einer Vielzahl von Unterlisten (Li) gebildeten Bit-Tabelle;
- falls der ausgelesene Status keinen vorherigen Empfang anzeigt, Verändern des Status (E308; E510; E816);
- falls der Status einen vorherigen Empfang anzeigt, Rückweisen der Nachricht (E306; E514; E814).

**10.** Empfangsverfahren nach Anspruch 9, wobei der der laufenden Nummer zugeordnete Status an einer Position der Tabelle, welche der laufenden Nummer entspricht, dargestellt ist.

**11.** Empfangsverfahren nach Anspruch 9 oder 10, wobei, wenn die Tabelle eine endliche Menge von laufenden Nummern erfasst, das Verfahren einen Schritt (E516; E808) zum Initialisieren wenigstens eines Vorempfangsstatus, wenn die laufende Nummer nicht in der endlichen Menge von laufenden Nummern enthalten ist, umfasst.

**12.** Empfangsverfahren nach einem der Ansprüche 9 bis 11, umfassend einen Entschlüsselungsschritt (E302), um die Nachricht und die laufende Nummer anhand einer verschlüsselten Nachricht zu erhalten.

**13.** Empfangsverfahren nach einem der Ansprüche 9 bis 12, umfassend einen Schritt zum Anzeigen der Nachricht (E310; E512; E818), wenn der ausgelesene Status keinen vorherigen Empfang anzeigt.

**Claims**

**1.** A device for receiving messages each having an order number, **characterized in that** it comprises:

- means (4) for storing a plurality of previous reception statuses in memory in the form of a table of bits formed by a plurality of sub-lists (Li) ;
- means for modifying the status *(SR(n); SR(n mod N); L$_i$(p))* associated with an order number (n) upon reception of a message (M) having the said order number (n);
- means for processing the message (M) as a function of the status *(SR(n); SR(n mod N); L$_i$(p))* associated with its order number (n).

**2.** A reception device according to claim 1, further comprising :

- means for storing a higher order number contained in the table at a given moment;
- means for resetting positions of the table associated with the order numbers ranging between the said order number (n) and the said higher order number contained in the table when the said order number (n) is higher than the said higher order number contained in the table.

3. A reception device according to claim 1 or 2, wherein the status associated with the said order number is represented at a table position (n; n mod *N; p)* corresponding to the said order number (n).

4. A reception device according to one of claims 1 to 3, wherein the table containing a finite set of order numbers, the device comprises means for initializing part of the previous reception statuses when the said order number is not included in the finite set of order numbers.

5. A reception device according to one of claims 1 to 4, comprising decryption means (2) for obtaining the message (M) and the order number (n) from an encrypted message ($M_R$).

6. A reception device according to one of claims 1 to 5, comprising means for rejecting the message when the said associated status indicates previous reception.

7. A reception device according to one of claims 1 to 6, comprising means (10) for displaying the message (M) when the said associated status does not indicate any previous reception.

8. An aircraft, **characterized in that** it comprises a device according to one of claims 1 to 7.

9. A method for receiving a message having an order number, **characterized by** the following steps :

> - reading (E304; E508; E812) of a previous reception status associated with the order number in a memory-storage means inside a table of bits formed by a plurality of sub-lists (Li);
> - if the read status does not indicate any previous reception, modification of the status (E308; E510; E816);
> - if the status indicates previous reception, rejection of the message (E306; E514; E814).

10. A reception method according to claim 9, wherein the status associated with the said order number is represented at a table position corresponding to the said order number.

11. A reception method according to one of claims 9 or 10, wherein the table containing a finite set of order numbers, the method comprises a step (E516; E808) of initialization of at least one previous reception status when the said order number is not included in the finite set of order numbers.

12. A reception method according to one of claims 9 to 11, comprising a step (E302) of decryption to obtain the message and the order number from an encrypted message.

13. A reception method according to one of claims 9 to 12, comprising a step (E310; E512; E818) of display of the message if the said read status does not indicate any previous reception.

Fig.1

Fig.2

Fig.3

Fig.4

Réception
message M
numéro d'ordre n ── E502

n≤N$_{max}$ – N? ──E504  OUI

NON

OUI  n>N$_{max}$? ──E506

E516

NON

Remise à 0 de SR
entre N$_{max}$+1 et n

E518── N$_{max}$←n

SR(n mod N)=0?  NON

E508  OUI

E514

Rejet du
message M

SR(n mod N)←1 ──E510

**Fig.5**

Affichage message M ──E512

numéro d'ordre    n    N$_{max}$

| 1 | 1 | 0 | 1 | 1 | 0 | 1 | 0 | 1 | 1 | | 1 | 1 | 1 | 1 | 1 | 1 | 1 | 0 | 1 | 0 |

position  0  1          p                                              N-1
SR

**Fig.6**

Fig.8

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005078986 A